# EUROPEAN PATENT SPECIFICATION

(11) **EP 0 364 972 B1**
(45) Date of publication and mention of the grant of the patent: **13.03.1996**
(21) Application number: 89119290.8
(22) Date of filing: 17.10.1989
(51) Int. Cl.: C22C 1/09, C04B 35/52, C04B 35/80, H01R 39/20, B60L 5/00

(54) **Carbon/metal composite**
Kohlenstoff/Metall-Verbundwerkstoff
Matériau composite charbon/métal

(30) Priority: 17.10.1988 JP 262110/88; 13.12.1988 JP 315611/88; 13.12.1988 JP 315612/88; 13.12.1988 JP 315613/88; 13.12.1988 JP 315614/88; 12.04.1989 JP 93842/89; 26.06.1989 JP 162891/89; 26.06.1989 JP 162892/89; 26.06.1989 JP 162893/89; 14.08.1989 JP 209771/89
(43) Date of publication of application: 25.04.1990
(60) Divisional application: 93111036.5
(73) Proprietor: SUMITOMO METAL INDUSTRIES, LTD., Osaka-Shi Osaka 541 (JP)
(72) Inventor: Sudani, Kiyoshi, Kashima-gun Ibaraki-ken (JP); Kano, Masato, Katori-gun Chiba-ken (JP); Sugimoto, Yukihiro Hasaki Research Center, Hasaki-machi Kashima-gun Ibaraki-ken (JP); Fukuda, Takashi, Kobe-shi Hyogo-ken (JP); Iwahashi, Toru, Yamato-Koriyma-shi Nara-ken (JP)
(74) Representative: TER MEER - MÜLLER - STEINMEISTER & PARTNER

(56) References cited:
- EP-A- 348 204
- EP-A- 0 212 666
- CHEMICAL ABSTRACTS, vol. 107, no. 21, November 23, 1987, Columbus, Ohio, USA T. IWAHASHI et al. "Manu- facture of composite carbona- ceous material for sliding electric contacts" page 363, column 2, Abstract- -no. 204 001p & Jpn. Kokai Tokkyo Koho JP 62-197 352, 01 Sep 1987
- CHEMICAL ABSTRACTS, vol. 107, no. 1, July 6, 1987, Columbus, Ohio, USA T.
- IWAHASHI et al. "Manufacture of carbonaceous materials sliding contacts" page 293, column 1, Abstract -no. 11 891v & Jpn. Kokai Tokkyo Koho JP 62-72 564, 03 Spr 1987
- CHEMICAL ABSTRACTS, vol. 81, no. 22, December 2, 1974, Columbus, Ohio, USA T. ISHIKAWA et al. "Carbon -metal composite slider" page 199, column 2, Abstract -no. 139 411a & Japan Kokai 74-54 211, 27 May 1974

## Description

This invention relates to a carbon/metal composite. More particularly, it relates to a carbon/metal composite having a high strength, good wear resistance, and good electrical properties and which is suitable for use as a sliding current collector such as a pantograph slider for electric trains.

In the past, carbon materials and metallic materials such as cast alloys and sintered alloys have been employed for sliding current collectors. Metallic materials have the advantages of high strength and good electrical conductivity, but they have the drawbacks that they produce many arcs, their sliding properties are inadequate, and they produce a great deal of wear in the trolley wires or third rails with which they are in sliding contact. Carbon materials have excellent lubricating properties and produce little wear of the wires or rails which they contact, but they have a high electric resistance and easily heat up during current collection.

The power consumption of railroad cars has been increasing due to higher train speeds and the installation of air conditioning. In order to cope with the increased power consumption, in recent years, sliding current collectors have begun to be made from carbon/metal composites, which combine the excellent sliding properties of carbon with the electrical conductivity of metals.

Japanese Published Examined Patent Application No. 56-14732 (1981) discloses a carbon/metal composite which is formed by impregnation under pressure of a metal into the pores of a carbon material.

Japanese Published Unexamined Patent Application No. 60-238402 (1985) discloses a current collecting material made from a carbon material containing metal powder which is obtained by adding a metal powder with good conductivity to a carbon raw material.

Japanese Published Unexamined Patent Application No. 61-245957 (1986) discloses a manufacturing method for a current collecting material in which a mixture of a carbon aggregate with a binder which contains metal fibers and/or carbon fibers is molded and baked, after which the baked body is impregnated with a metal.

Japanese Published Unexamined Patent Application No. 62-72564 (1987) discloses a manufacturing method for a sliding current collecting material in which metal fibers are blended into a carbon raw material, and the blend is molded at ambient temperature and then baked.

Japanese Published Unexamined Patent Application No. 62-197352 (1987) discloses a manufacturing method for a sliding current collecting carbon material in which metal fibers are blended with a carbon raw material so as to be oriented unidirectionally, after which molding and baking are performed.

Japanese Published Unexamined Patent Application No. 63-215731 (1988) discloses a manufacturing method for a carbon/metal composite frictional material for use in brakes in which pitch, metal fibers, and graphite are mixed and then molded at a temperature of 450 - 600 °C under a molding pressure of at least 40 kg/cm.

However, the great majority of carbon/metal composites produce a great deal of wear by sliding contact with trolley wires, normally made of copper, when the surfaces of the wire are in a roughened condition. Such a roughened surface of trolley wires will be usually observed while pantograph sliders formed of a sintered metal which are at present prevailing is being replaced by those of a carbon/metal composite in the future, i.e., during a period when sliders of these two types are used concurrently.

Furthermore, most of the conventional carbon/metal composites are inferior to conventional metal sliders with respect to bending strength and impact strength. It is easy for sliders made from carbon/metal composites to be chipped or broken by collision with a hanger ear of a trolley wire which has been detached due to vibration or shock caused by running trains or any other accidental cause, so they are less safe and less reliable than conventional metal sliders.

Furthermore, carbon/metal composites have a higher electric resistance than conventional metal sliders. A high electric resistance leads to an increase in the temperature of trolley wires due to Joule heating. The temperature increase is particularly significant when a train is stopped but the air conditioning and interior lighting of the train are still operating. A high temperature may cause the breakage of the trolley wires under high tension, which is extremely dangerous.

EP-A-212 666 discloses an electrical contact comprising a compact body comprising a carbon matrix and a metal powder. Graphite particles forming the carbon matrix may be metal-plated.

EP-A-348 204 which forms part of the state of the art in the sense of Art. 54(3) EPC discloses a metal-containing carbonaceous material comprising a carbonaceous body and fine metal particles having an average particle size of 1 µm or less dispersed in the carbonaceous body. The metal particles may have a carbon layer resulting from a surface layer of an anion surfactant.

It is possible to improve the strength and electrical properties of a carbon/metal composite by increasing the metal content of the composite. However, as the metal content is increased, more sparks are generated between the slider and the trolley wires, and the wear of the trolley wires and the slider is increased, which is undesirable.

Accordingly, it is an object of the present invention to provide a carbon/metal composite having a good mechanical strength such as bending strength and impact strength, as well as good wear resistance.

It is another object of the present invention to provide a carbon/metal composite suitable for use as pantograph sliders which has a good mechanical strength. good wear resistance, and a low electric resistance and which does not generate many sparks when in moving contact with a trolley wire.

It is still another object of the present invention to provide a carbon/metal composite which is minimized in wear loss when it is in sliding contact with a trolley wire having a roughened surface.

It is a further object of the present invention to provide a method for the manufacture of a carbon/metal composite having the above-described properties.

Other objects as well as the nature and the advantages of the present invention will be apparent from the following description.

In one aspect of the invention, there is provided an improved carbon/metal composite comprising a carbon matrix and metal fibers having a diameter of no greater than 0.5 mm and a length of at least 1 mm and being distributed in the carbon matrix in an amount of at least 10% by volume ofthe composite, the surfaces of at least a portion of the metal fibers being coated or alloyed with another material selected from metals and ceramics having a tendency to form carbides equal to or less than the metal fibers, wherein the material coated on the fibers has a thickness of at least 0.1 µm, thereby imparting to the composite improved properties with respect to at least one of mechanical strength, impact resistance, wear resistance, and electric conductivity.

In another aspect, there is provided a process for preparing a carbon/metal composite as defined above, comprising forming a molding mixture comprising a carbon raw material and at least one component selected from (a) said metal fibers, at least a portion of which are coated with said another material selected from metals and ceramics having a tendency to form carbides which is equal to or lower than that of the metal constituting the metal fibers, (b) said metal fibers, at least a portion of which have surfaces alloyed with another metal having a tendency to form carbides which is equal to or lower than that of the metal constituting the metal fibers, and (c) a mixture of said metal fibers with a metal powder, said metal powder having a tendency to form carbides which is equal to or lower than that of the metal constituting the metal fibers, followed by molding of the molding mixture to form a molding, and baking of the molding to carbonize the carbon raw material.

If desired, the metal fibers can be oriented in a substantially unidirectional manner. Unidirectional orientation or alignment of the metal fibers further lowers the electric resistance and increases the impact strength of the composite.

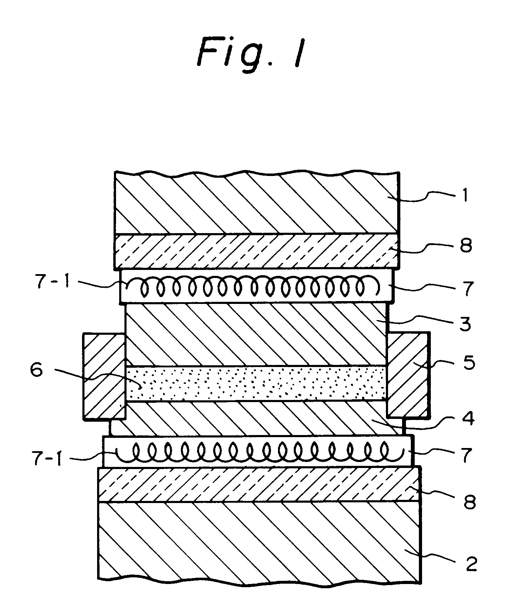

Fig. 1 is a schematic view of a molding aparatus which can be employed for manufacturing a carbon/metal composite according to the present invention.

A carbon/metal composite according to this invention has metal fibers distributed in a carbon matrix. It is manufactured by preparing a molding mixture which comprises a carbon raw material and metal fibers, molding the mixture, and then baking the resulting molding to carbonize the carbon raw material.

Various carbon raw materials can be employed to form a carbon/metal composite according to this invention. Some examples are (1) a self-sintering mesophase powder, (2) a binary raw material which is a mixture of a carbonaceous aggregate such as coke powder with pitch which functions as a binder, and (3) a carbonizable thermosetting resin such as a phenolic resin.

From the standpoint of wear resistance, the carboneceous aggregate in the binary raw materials is preferably a hard carbonaceous carbon material such as coke powder which can be obtained by carbonizing pitch or coal at around 1000 °C or an isotropic carbon powder which can be obtained by carbonizing a phenolic resin.

From the standpoints of strength and wear resistance, the carbonaceous aggregate is ground to a particle size of preferably at most 50 µm and more preferably at most 20 µm.

The pitch which is employed as a binder can be coal tar pitch, or pitch with a high softening point which is obtained by heating coal tar pitch.

The pitch preferably has fluidity when heated. Furthermore, in order to increase the strength and wear resistance of the resulting composite, the volatile content of the pitch is preferably as low as possible.

When the composite is to be used for a pantograph slider, a binary carbon material comprising the above-described hard carbonaceous aggregate and pitch as a binder as primary components is desirable from the standpoints of cost and performance.

The metal fibers can be formed by a variety of methods, such as by the thin sheet slicing method, the chatter vibration cutting method, the wire cutting method, or by drawing. The shape of the individual metal fibers is not critical. For example, they can be rod-shaped, needle-shaped, wedge-shaped, wave-shaped, net-shaped, or a mixture of fibers having the above shapes.

There is no particular restriction of the material used for the metal fibers. The fibers can be steel fibers manufactured from common steel, high tensile steel, stainless steel, and the like. Metals other than steel can also be used, such as copper. Steel fibers made from low-carbon steel exhibit the best properties. The presence of manganese or chromium in steel fibers promotes cementation of the steel, which decreases the strength of the resulting composite. Therefore, the content of these elements is preferably as low as possible.

The dimensions of the metal fibers are not critical, but from the standpoint of obtaining a strong molding, the diameter of the fibers is at most 0.5 mm and preferably at most 0.3 mm. The fiber length is at least 1 mm and preferably at least 3 mm. Strictly the diameter of a fiber should be expressed as the equivalent diameter that is the diameter of a circle having the same cross-sectional area as the fiber.

As will be described in greater detail further on, when using two or more types of metal fibers having different dimensions, it is possible for some of the fibers to have a diameter of up to around 1 mm. Generally, the aspect ratio of the metal fibers (the ratio of fiber length to fiber diameter) is preferably at least 10. Although extremely elongate fibers having an aspect ratio exceeding 100 may be used, they tend to become entangled when blending with a carbon raw material. Therefore, if they are used, it is preferred that the amount of these fibers be not so large.

There is no particular restriction on the amount of the metal fibers. In order to improve the wear resistance, mechanical strength, and electric conductivity of the resulting composite, it is preferable that the metal fibers be present in an amount of at least 10 volume % in the composite. A larger amount of metal fibers on the order of 50 to 60 volume % may be employed, although the presence of metal fibers in an amount exceeding about 50 volume % tends to produce many sparks when the composite is used as a pantograph slider, thereby increasing the wear rate of the composite. Preferably the amount of the metal fibers is in the range of from 10 to 40 volume %, and more preferably in the range of from 15 to 35 volume % of the composite.

The present inventors discovered that the reason why conventional carbon/metal composite sliders have a low bending strength is that during the baking stage of manufacture of the composite, the metal fibers are carburized by the surrounding pitch and carbon powder, and metal carbides are formed in the fibers. For example, steel fibers are converted into a composition containing a large amount of cementite (Fe₃C). The carburization to form a metal carbide may be hereunder referred to as cementation.

Carburization or cementation of metal fibers such as steel fibers does not occur to a great extent at a baking temperature of less than 900°C . However, the baking stage in which the carbon raw material is carbonized to form a carbon matrix is normally performed in the vicinity of 1000 °C so that the resulting carbon matrix can fully exhibit their strength, and at this temperature, cementation of the fibers is greatly accelerated. The cementite which is formed by cementation of steel fibers is hard and brittle. A composite containing fibers of cementite has good wear resistance, but its toughness is low, and the bending strength is significantly decreased. Therefore, it is desirable to suppress cementation of the metal fibers during baking.

The present inventors discovered that the following measures are effective for suppressing cementation of metal fibers such as steel fibers.
(1) Prior to molding, if the surfaces of steel fibers are coated with another material such as copper, nickel, cobalt, aluminum, or silicon which has a tendency to form carbides which is equal to or lower than iron, the cementation of the steel fibers can be suppressed significantly, and the strength of the resulting composite can be greatly increased.
(2) Even if the steel fibers are not coated, if a metal powder mainly comprising a metal with such a low tendency to form carbides is added to the steel fibers, the cementation of the steel fibers can be suppressed.
(3) The cementation of steel fibers can also be suppressed by alloying at least the surfaces of the steel fibers with another metal having a low tendency to form carbides.
(4) If the surfaces of only a portion of the steel fibers are coated or alloyed with such a material having a low tendency to form carbides, the cementation of steel fibers can be substantially suppressed.

According to one embodiment of the present invention, the surfaces of at least a portion of the metal fibers which are present in the composite are coated or alloyed with another material which has a tendency to form carbides which is equal to or lower than the metal fibers, thereby imparting improved mechanical strength to the carbon/metal composite.

The coating of metal fibers can be applied by any conventional method such as vapor deposition, but typically, it is applied by non-electrolytic plating. Cementation of the metal fibers can be effectively suppressed even if the coating has a thickness of only 0.1 µm. There is no exact upper limit on the thickness of the coating, but from the standpoint of economy, a thickness of at most 10 µm is generally suitable. The thickness is preferably 0.1 - 5µm and more preferably 0.2 - 2µm.

Any material which has a tendency to form carbides which is equal to or lower than the metal constituting the metal fibers can be used as a coating material. When the resulting composite is to be used as a pantograph slider, both excellent resistance to cementation and a low electric resistance are necessary, so the coating material is preferably a metal. When the metal fibers are steel fibers, preferred coating materials are such metals as copper, nickel, cobalt, aluminum, and silicon. If the coating material has a high electric resistance, the metal fibers will be prevented from improving the conductivity of the composite, so the electric resistance of the composite becomes extremely high, and the composite will be unsuitable for use as a pantograph slider.

However, when the composite is to be used as a brake material or other type of sliding member which does not carry current, the conductivity is not important, and ceramics such as alumina, silicon carbide, and silica which have a high electric resistance can be employed as a coating material. A coating of a ceramic can be applied by any suitable technique such as plasma spray coating.

When the surfaces of metal fibers are coated with a material having a low tendency to form carbides, the cementation of the metal fibers is effectively suppressed during the baking stage. As a result, the strength, and particularly the bending strength, of the resulting composite is greatly increased.

For this purpose, of course, it is possible to coat the surfaces of all the metal fibers with another material as above. However, while surface coating increases the bending strength of a composite, it decreases the amount of cementite formed in the fibers, which due to its hardness increases the wear resistance of the composite. Therefore, coating all the metal fibers tends to decrease the wear resistance of the resulting composite.

This decrease in the wear resistance can be prevented if a portion of the metal fibers have uncoated surfaces. The uncoated metal fibers react with carbon in the surrounding carbon raw material during baking and form cementite which has excellent wear resistance. As a result, a composite can be obtained which has good bending strength without sacrificing wear resistance.

When coated and uncoated metal fibers are used together, there is no particular limit on the ratio of coated to uncoated fibers. However, cementite can greatly improve wear resistance even when present in only a small quantity. Therefore, in order to maintain a good bending strength, it is desirable to use a larger amount of coated metal fibers. The coated metal fibers preferably constitute at least 50 weight % and more preferably at least 65 weight % of the total amount of metal fibers.

The cementation of the metal fibers during the baking stage can also be effectively suppressed by adding to the carbon raw materials a powder of a metal which has a tendency to form carbides which is equal to or lower than the metal fibers. As a result, the strength of the composite can be increased.

Useful metal powder can be formed from any metal having such a low tendency to form carbides. When the metal fibers are steel fibers, suitable metal powders include those formed from copper, nickel, aluminum, cobalt, and silicon.

The element distribution of a carbon/metal composite which was prepared from a molding mixture containing a metal powder was investigated using an electron probe micro analyzer (EPMA). Elements of the metal powder were found inside the metal fibers. When X-ray diffraction analysis was performed, almost no cementite was found. These results show that when the molding is baked to carbonize the carbon raw material, the metal powder added is spread into the metal fibers to form an alloy at least near the surfaces of the fibers, and the cementation of the metal fibers is thereby prevented.

When the metal powder is formed from a metal such as manganese or chromium which has a great tendency to form carbides, the strength of the resulting carbon/metal composite is decreased as compared to a composite to which no metal powder is added. The reason for this decrease in strength is that cementation is accelerated, resulting in a decrease in the strength of the metal fibers themselves. Furthermore, voids are formed between the metal fibers and the carbon matrix, causing a decrease in the bond strength between the fibers and the matrix.

The metal powder may contain one or more elements which have a tendency to form carbides equal to or lower than the metal fibers. When it contains more than one of such elements, the powder may be made of an alloy of these elements, or it may be a mixture of the respective metal powders of these elements.

The purity of the metal powder is not critical unless it contains a large amount of undesirable elements such as manganese or chromium. Thus, any metal powder may be used which contains a major amount of a metal having a low tendency to form carbides. For example, an alloy such as ferronickel can be employed.

The average particle size of the metal powder is preferably at most 100 µm and more preferably from 0.5 to 50 µm. If the average particle size is greater than 100 µm, cracks can easily form in the periphery of the metal particles. Furthermore, the number of points of contact between the metal particles and the metal fibers is decreased, so there is reduced formation of alloys in the fibers which serve to suppress cementation.

When metal powders having a low tendency to form carbides are employed, the metal fibers may be uncoated. Due to the effect of the addition of metal powder, a composite having a satisfactory strength can be obtained even if the metal fibers are uncoated. However, it is possible for all or part of the metal fibers to be coated so as to obtain a further increase in the bending strength. When coated metal fibers and metal powders are both employed, the metal constituting the coating and the metal constituting the metal powder can be the same or different from one another, as long as both metals have a tendency to form carbides which is equal to or lower than the metal constituting the metal fibers.

The metal powder may be simply added to the carbon raw material together with the metal fibers and then mixed by usual methods. However, the strength of the resulting composite can be increased if the metal fibers (either coated or uncoated) are first mixed alone with the metal powder in order to adhere the metal powder to the metal fibers, and then the metal fibers and metal powder are mixed with the carbon raw material. When mixing is performed in this manner, the bond strength between the metal powder and the metal fibers can be increased by the addition of a small quantity of a resinous or oily binder or a surfactant.

There is no particular restriction on the amount of metal powder which can be added. However, when the metal fibers are totally uncoated, the amount of metal powder is preferably 0.5 - 20 volume % and more preferably 1 - 10 volume % of the molding mixture. When the metal fibers are coated, the amount of metal powder can be decreased.

As mentioned above, the addition of a metal powder can suppress the cementation of the metal fibers through the formation of an alloy in the fibers during the baking stage of manufacture. Therefore, cementation of the metal fibers and an accompanying decrease in strength of the resulting composite can be prevented by using metal fibers the surface of which have been alloyed, prior to use, with a metal having a tendency to form carbides which is equal to or lower than the metal fibers.

One method of alloying prior to use is to coat the surface of the metal fibers, such as steel fibers, with one or more alloying metal such as copper, nickel, cobalt, aluminium, or silicon which have a low tendency to form carbides and then to heat the coated steel fibers at a high temperature to diffuse the alloying metal into the metal fibers to form an alloy at least near the surface of the metal fibers. Alternatively, uncoated metal fibers can be mixed with a metal powder containing predominantly one or more of the above alloying metals and then heated to a high temperature to perform alloying.

In either case, the heat treatment in order to perform alloying should be carried out at a temperature lower than the melting point of the metal fibers, but it should be carried out long enough and at high enough temperature for a substantial amount of the alloy element to diffuse into the metal fibers. When the metal fibers are steel fibers, heat treatment is preferably carried out at a temperature of approximately 600 - 1100°C for approximately 30 minutes - 3 hours.

Even if heat treatment is not carried out in order to perform alloying prior to mixing of the fibers with the carbon raw material, during the baking stage in which the molding is baked in order to carbonize the carbon raw material, the metal fibers are exposed to a temperature equivalent to that used in the heat treatment for a considerable length of time. Therefore, if all or a portion of the metal fibers are coated with a metal having a low tendency to form carbides, and/or if a metal powder having a low tendency to form carbides is added to the metal fibers, then in the baking stage of manufacture, the coating or added metal powder will be alloyed with the metal fibers to a certain extent. As a result, the formation of cementite will be suppressed, and the strength will be improved.

According to one embodiment of this invention, metal fibers are blended with a carbonaceous raw material so as to orient the fibers in substantially unidirectional alignment. The metal fibers may be uncoated, or all or part of the fibers may be coated. If the metal fibers are aligned in this manner, the continuity of the metal fibers in the resulting carbon/metal composite is increased, so the electric resistance is enormously decreased, and the electrical properties of the composite are improved. Furthermore, the metal fibers effectively act as reinforcing members, so the impact resistance of the composite is greatly increased. Furthermore, in a bending test, even after the yield point is exceeded, the composite bends instead of failing, so it exhibits an extremely high bending strength.

The following methods can be used to orient the metal fibers substantially unidirectionally in the carbon raw material.
(1) When the metal fibers are made of a ferromagnetic substance such as steel fibers, after a molding mixture of the metal fibers and the carbon raw material is placed into a mold, a magnetic field of at least several hundreds of Gauss is applied to the molding mixture. The magnetic field aligns the fibers in the direction of the field. After orientation has been performed, molding is carried out.
(2) When the metal fibers are made of copper or similar material which is not ferromagnetic, the metal fibers are formed into a cloth in which the warp length is far greater than the woof length so as to provide a substantial unidirectional orientation. The cloth is then laminated with the carbon raw material, placed into a mold, and molded.
(3) When the metal fibers are short with a length of at most 5 mm, a mixture of the carbon raw material and the short fibers is passed through slits having a width which is smaller than the length of the fibers. The mixture is then placed into a mold and molded.
(4) Molding is carried out by extrusion.

The carbon/metal composite of the present invention is prepared by mixing a carbon raw material with one or more types of metal fibers (all or a part of which may be coated or alloyed with another material as mentioned above) and an optional one or more metal powders, if any is used, to form a molding mixture, then molding the mixture, and baking the resulting molding to carbonize the carbon raw material.

In the mixing stage or molding stage of manufacture, the fibers can be oriented substantially unidirectionally in the manner described above. The content, material, and/or dimensions of the metal fibers can be varied along the thickness of the molding by preparing a plurality of mixtures of metal fibers and carbon raw materials, each mixture differing with respect to the content, material, or dimensions of the metal fibers present therein. The different mixtures can then be placed in a prescribed order into a mold and molded.

Molding can be performed by various conventional methods, such as extrusion, cold isostatic pressing (CIP), cold molding, or hot pressig. Of these methods, hot pressing using a binary carbon raw material (a mixture of coke powder and pitch) gives a composite with the highest strength and wear resistance.

During hot pressing, it is desirable to heat the molding mixture under pressure to a temperature at which the pitch will harden, i.e., at least 480°C in order to obtain good strength and wear resistance in the resulting composite. Therefore, the heating temperature is preferably at least 480 °C and more preferably at least 500 °C . The possible highest temperature during hot pressing is approximately 600°C . If this temperature is exceeded, then cracks tend to form in the molding. During at least a portion of the time when the mixture is being heated from room temperature to the hot pressing maximum temperature, a molding pressure of preferably at least 3.92 MPa (40 kg/cm) and more preferably at least 7.84 MPa (80 kg/cm) is applied to the mixture. If the molding pressure is less than 3.92 MPa (40 kg/cm), the bond strength between the binder and the metal fibers decreases, and there is a tendency for the wear resistance to decrease.

Figure 1 is a schematic view of an example of a molding apparatus for hot pressing. In the figure, 1 is a movable upper press head, 2 is a stationary lower press head, 3 is an upper mold, 4 is a lower mold, 5 is a metal frame, 6 is a molding mixture, 7 is a heating plate containing a sheath heater 7-1, and 8 is a thermal insulating member. After the molding mixture 6 is placed between the upper mold 3 and the lower mold 4, the heating plate 7 is heated by passing current through the sheath heater 7-1, and the molding mixture is pressed by the upper press head. The upper and lower molds can be preheated if desired.

The resulting molding is baked by heating it in a non-oxidizing atmosphere at a temperature below the melting point of the metal fibers. The baking carbonizes the carbon raw material, and a carbon/metal composite in which metal fibers are distributed in a carbon matrix is obtained. The baking temperature is preferably at least 900 °C so that the carbon can adequately exhibit its strength. However, if the baking temperature exceeds 1100 °C, when the metal fibers are coated with another metal, the coating layer may melt and decrease in effectiveness. Furthermore, the metal fibers themselves may undergo a transformation which causes a decrease in the strength of the composite. Therefore, the baking temperature is preferably 900-1100 °C and more preferably 950-1050 °C .

A carbon/metal composite according to the present invention is particularly suitable for use as a pantograph slider on account of its strength, wear resistance, and electrical properties. However, it can also be used for other types of sliding current collectors such as current collecting brushes, or for other types of sliding parts such as friction members for friction brakes, bearings, and sealing members.

The present invention will now be described in further detail by means of the following exmaples, which are given merely for the purpose of illustration.

In the examples, the softening point of the pitch which was used as a binder was measured using a flow tester manufactured by Shimadzu Seisakusho.

When the metal fibers were plated, the average plating thickness on the fibers was calculated on the basis of the nominal dimensions of the fibers, the coated weight of the plating, and the true specific gravities of the metal constituting the metal fibers and the plating metal.

The bending strength of the carbon/metal composites obtained in the examples was measured using test pieces of 10 mm x 60 mm x 10 mm thick in size cut from the composites. When the thickness of the molding is roughly 10 mm, the thickness of the test pieces was the same as the baked composite. The 60 mm side of the test piece was cut parallel to the lengthwise direction of the composite. The bending strength was then measured by a three-point bending test using a 40 mm span. The load during the bending test was applied in the same direction as the load was applied by the molding press during molding.

The impact strength was measured by a Charpy impact test using test pieces which measured 10 mm x 60 mm x 10 mm thick and which were cut in the manner described above. The direction of impact during the test was perpendicular to the direction of load applied by the molding press during molding.

Wear resistance of the composite was measured using a pin-on-disk wear tester. Test pieces measuring 8 mm long x 8 mm wide were used. The 8 mm x 8 mm surface was used for testing and was contacted with a copper plate having a diameter of 300 mm (diameter of contacting portion = 132mm, roughness of contacting surface = 90 µm). The copper plate was forced to contact the test piece under a prescribed load and rotated for a prescribed length of time, after which the reduction in the thickness of the worn surface of the test piece was measured. The wear resistance was expressed as the reduction in thickness or as the amount of wear (worn volume) per 100 km of sliding.

The electric resistance was measured on test pieces measuring 10 mm wide x 60 mm long x 10 mm thick. Measurement was performed using the four-terminal method in which current was made to flow in the lengthwise direction of the test pieces.

### Example 1

In this example, a composite was manufactured using metal fibers coated with copper plating.

Regular grade petroleum coke was carbonized at 1000°C, after which it was placed into an oscillating mill containing stainless steel balls with a diameter of 10 mm. Grinding was performed for 4 hours to obtain coke powder with an average particle diameter of 11.5 µm, which was used as an aggregate of a binary carbon raw material for the preparation of a molding mixture.

Pitch, which was used as a binder, was obtained by heating coal tar under a reduced pressure of 8 KPa (60 mmHg) at 440 °C for 1 hour. The resulting coal tar pitch had a softening point of 250 °C and was used after grinding to a size of 0.250 mm (60 mesh) or smaller.

The metal fibers were low carbon steel fibers (SPCC-1B) measuring 0.1 mm x 0.1 mm x 3 mm long. The steel fibers were immersed at room temperature in 80 times their weight of a plating solution having the composition shown in Table 1 for the time shown in Table 2 to form copper plating. The fibers were then removed from the plating solution, thoroughly washed with water, then rinsed with acetone, and dried in nitrogen at 100°C to obtain copper-plated steel fibers. The average plating thickness is also shown in Table 2.

22 parts by weight of coke powder, 10 parts by weight of pitch as a binder, and 68 parts by weight of the steel fibers were mixed to prepare a molding mixture. The steel fibers constituted roughly 30 volume % of the molding.

This molding mixture was molded using the hot press shown in Figure 1. 350g of the molding mixture were placed into a steel mold with an inner diameter of 100 mm. The molding mixture was heated without the application of pressure at a rate of 10°C /minute to 350°C. From 350 °C, it was subjected to a pressure of 21.56 MPa (220 kg/cm) while being heated at a rate of 5 °C /minute to 540°C . A pressure of 21.56 MPa (220 kg/cm) was then maintained at 540°C for 1.5 hours. The resulting molding was removed from the mold after cooling.

The molding was then baked by placing it in coke powder and heating in a nitrogen gas atmosphere up to 480 °C at a rate of 100 °C /hour. It was then maintained at 480 °C for 2 hours, after which it was heated at a rate of 15 °C/hour to 1000 °C . This temperature was maintained for 3 hours to carbonize the carbon raw material. After cooling, a carbon/steel composite was obtained.

The bending strength of the resulting composites is shown in Table 2. For comparison, the bending strength of a carbon/steel composite containing steel fibers which were not coated with copper plating is also shown in Table 2.

From Table 2, it can be seen that a composite containing steel fibers which are coated with a copper plating has a far higher bending strength than a composite containing uncoated steel fibers.

**Table 1**

| | |
|---|---|
| Distilled water | 1000 mℓ |
| Copper nitrate | 15 g |
| Sodium hydrogen carbonate | 10 g |
| Rochelle salt | 30 g |
| Sodium hydroxide | 20 g |
| Formalin (37%) | 100 mℓ |

**Table 2**

| Run No. | | Duration of immersion (hr) | Average plating thickness (µm) | Bending strength [(kg/cm)] (N/mm) |
|---|---|---|---|---|
| Comparative | | - | - | 104.86 (1070) |
| This Invention | 1 | 0.5 | 0.09 | 139.16 (1420) |
| | 2 | 1.0 | 0.24 | 155.82 (1590) |
| | 3 | 2.0 | 0.40 | 168.56 (1720) |
| | 4 | 4.0 | 1.10 | 163.66 (1670) |

### Exmaple 2

In this example, a composite was manufactured using nickel-plated steel fibers.

The method of Example 1 was repeated with exception that the steel fibers were plated with nickel plating instead of copper plating. Steel fibers like those used in Example 1 were plated by a non-electrolytic plating method using the plating solution shown in Table 3. Plating was performed by immersing the steel fibers in 100 times their weight of the plating solution for 20 minutes. During plating, the pH of the plating solution was adjusted to 9 by the addition of an aqueous ammonia, and the temperature was maintained at 85 °C . After the completion of plating, the steel fibers were washed and dried in the same manner as in Example 1 to obtain nickel-plated steel fibers. The average thickness of the plating layer was 1.2 µm.

A carbon/metal composite containing 30 volume % of the nickel-plated steel fibers was then manufactured. It had a bending strength of 176.4 N/mm (1800 kg/cm).

**Table 3**

| | |
|---|---|
| Distilled water | 1000 mℓ |
| Nickel chloride | 30 g |
| Sodium citrate | 100 g |
| Ammonium chloride | 50 g |
| Sodium hypophosphite | 10 g |

### Example 3

In this example, a composite was manufactured using both coated fibers and uncoated fibers.

Steel fibers like those used in Example 1 were immersed for 2 hours at 20°C in 10 times their weight of a plating solution having the composition shown in Table 1. After immersion, they were washed and dried in the same way as in Example 1 to obtain copper-plated steel fibers. The average plating thickness was calculated to be approximately 0.5 µm.

The resulting copper-plated steel fibers, uncoated steel fibers, or a mixture of copper-plated and uncoated steel fibers were mixed with the same type of coke powder and pitch as were used in Example 1 in the proportions shown in Table 4 to form a molding mixture. In each case, the total amount of fibers was roughly 30 volume % of the molding. 450 g of each molding mixture were placed into a steel mold with inner dimensions of 100 mm x 100 mm and molded by hot pressing.

During molding, the temperature of the molding mixture was increased at a rate of 3°C /minute. From room temperature to 300°C, a pressure of 0.098 MPa (1 kg/cm) was applied, and from 300°C to 550 °C, a pressure of 19.6 MPa (200 kg/cm) was applied. After maintaining the temperature at 550 °C under a pressure of 19.6 MPa (200 kg/cm) for 1 hour, the resulting molding was cooled and removed from the mold.

The molding was baked for carbonization in the same manner as in Example 1 to obtain a carbon/metal composite. The bending strength of the composite was measured. A wear resistance test piece having an 8 mm x 8 mm testing (sliding) surface which was parallel to the surface of the press during molding was cut from the composite. A wear resistance test was performed by passing a 50A, 50Hz current between the testing surface of the test piece and a copper plate while rotating the copper plate at a speed of 100 km/hour under a load of 3 kg for 1 hour. Wear resistance was evaluated by measuring the reduction in the thickness of the testing surface. The results of measurements are shown in Table 4.

Examples 4 and 5 show the effects of the addition of metal powder to a composite.

### Example 4

A molding mixture was prepared using the same coke powder, pitch, and steel fibers (uncoated) as were used in Example 1. To these materials were added powder (JIS Grade 1) selected from copper powder (average particle diameter = 5 µm), nickel powder (average particle diameter = 10µm), and cobalt powder (average particle diameter = 10µm). The composition of the resulting molding mixture was 25 parts by weight of coke, 10 parts by weight of pitch, 55 parts by weight of steel fibers, and 10 parts by weight of metal powder. The steel fibers constituted about 25 volume % of the resulting moldings.

For comparison, molding mixtures were prepared using manganese powder and chromium powder as the metal powder. These powders have a greater tendency to form carbides than does iron. In addition, a molding mixture was prepared using 65 parts by weight of steel fibers without any metal powder.

These molding mixtures were molded and baked for carbonization in the same manner as in Example 1 to obtain carbon/steel composites. The bending strengths of the resulting composites are shown in Table 5.

As is clear from Table 5, composites containing a metal powder having a low tendency to form carbides had a much higher bending strength than composites which did not contain a metal- powder. On the other hand, the addition of manganese or chromium powder resulted in a decrease in the bending strength compared to that of the composite containing no metal powder.

### Example 5

Molding mixtures containing copper powder were prepared in the same manner as in Example 4. The resulting moldings contained 25 volume % of steel fibers, and the amount of copper powder which was added was varied between 1 - 10 volume % while maintaining the total content of copper powder and coke powder at 53 volume %. The composition of each molding mixture and the bending strength of the resulting composite are shown in Table 6.

As is clear form Table 6, all of the resulting carbon/steel composites had a high bending strength. There was a substantial increase in bending strength even with the addition of as little as 0.5 volume % of copper powder.

### Example 6

In this example, both plated metal fibers and metal powder were employed.

Molding mixtures were prepared using the same coke powder, pitch, and copper-plated or uncoated steel fibers as used in Example 1, and the same nickel powder as employed in Example 4. Plating was performed by immersing steel fibers in 20 times their weight of the copper plating solution employed in Example 1 at 20 °C for 1 hour. The average plating thickness of the copper plating was 0.2 µm.

Molding mixtures having the compositions shown in Table 7 were prepared. 300 g of each molding mixture were placed into a steel mold with an inner diameter of 100 mm, and hot pressing was performed under the same conditions as in Example 3. The resulting moldings were packed in coke powder and heated in a nitrogen atmosphere from room temperature to 1000 °C at a rate of 100 °C /hour. After being maintained at 1000°C for 3 hours, the moldings were cooled. The bending strengths of the resulting carbon/steel composites are also shown in Table 7.

As is clear from Table 7, a composite containing both plated metal fibers and a metal powder has a particularly high bending strength.

Examples 7 and 8 illustrate the use of metal fibers which have been previously alloyed with a metal having a low tendency to form carbides.

### Example 7

Steel fibers like those used in Example 1 were plated with copper using the same plating solution as in Example 1. Plating was performed by immersing the fibers in 40 times their weight of the plating solution at 20 °C for 2 hours. The resulting copper plated fibers had a plating thickness of 0.6µm.

The copper-plated steel fibers were placed into a porcelain crucible which was then packed with coke powder. The fibers were then heated in a nitrogen atmosphere to 1000°C at a rate of 300 °C /hour. After being maintained at 1000°C for 2 hours, the fibers were cooled, and steel fibers alloyed with copper were obtained. These metal fibers were used to prepare a molding mixture.

The molding mixture comprised of 25 parts by weight of coke powder like that used in Example 1, 10 parts by weight of pitch like that used in Example 1 (prepared by heating at 450 °C), and 65 parts by weight of steel fibers alloyed with copper. The fibers constituted about 30 volume %. For comparison, a molding mixture containing uncoated fibers was also prepared.

The molding and baking were performed in the same manner as in Example 1 with the exception that 450g of the molding mixture were placed in the mold and that the molding pressure was 19.6 MPa (200 kg/cm). A resulting carbon/steel composite containing alloyed metal fibers had a bending strength of 181.3 N/mm (1850 kg/cm), while a composite which contained uncoated metal fibers had a bending strength of 122.5 N/mm (1250 kg/cm).

### Example 8

Steel fibers like those employed in Example 1 were placed into a rotary kiln together with twice their weight of nickel powder having an average particle diameter of 20 µm. While being rotated, the fibers and the powder were heated in a nitrogen atmosphere at a rate of 500 °C /hour to 900°C, maintained at that temperature for 1 hour, and then cooled. The remaining nickel powder was separated from the steel fibers, which were now alloyed with nickel.

Using the steel fibers alloyed with nickel, a molding mixture was prepared. The preparation of the molding mixture, molding and baking were performed in the same manner as in Example 7. The resulting carbon/steel composite had a bending strength of 194.04 N/mm (1980 kg/cm).

In Examples 9 - 12, carbon/metal composites were prepared using metal fibers oriented in substantially unidirectional alignment.

### Example 9

Low carbon steel fibers (SPCC-1B) measuring 0.05 mm x 0.05 mm x 3 mm long were immersed at room temperature in 80 times their weight of the copper plating solution used in Example 1, after which they were washed and dried. The resulting copper-plated steel fibers had an average plating thickness of either 0.3 µm or 0.5 µm.

68 parts by weight of the plated steel fibers were mixed with 22 parts by weight of coke powder having an average particle diameter of 15µm and 10 parts by weight of pitch as binder which was ground to a size of 0.250 mm (60 mesh) or less to obtain a molding mixture. The coke powder was prepared by the same method as in Example 1. The pitch binder was obtained by heat treatment of coal tar under a reduced pressure of 100 mmHg at 440°C for 2 hours and had a softening point of 240 °C . The steel fibers constituted roughly 30 volume % of the molding mixture.

The molding mixture was then placed into a stainless steel mold with inner dimensions of 50 mm x 80 mm. Enough molding- mixture was used to obtain a molding having a final thickness of 10 mm. The steel fibers were oriented unidirectionally by applying a magnetic field of 50,000 gauss to the molding mixture while vibrating the mold. The magnetic field was applied such that the line of the magnetic flux is parallel to the longer side (lengthwise direction) of the mold. Thereafter, molding by hot pressing was then performed with a hydraulic press having a 30-ton capacity. Under a molding pressure of 19.6 MPa (200 kg/cm), the molding mixture was heated at 5°C /minute to 550°C, maintained at that temperature for 1 hour, and then cooled. The resulting molding measured 50 mm wide x 80 mm long x 10 mm thick and contained copper-plated steel fibers which were aligned parallel to the length of the molding.

The molding was placed inside a stainless steel vessel which was packed with coke powder. The vessel was heated in a nitrogen atmosphere at a rate of 10°C /hour to 1000 °C, maintained at that temperature for 4 hours, and then cooled to obtain a carbon/steel composite.

The bending strength and Charpy impact strength of the composite were measured. In addition, a test piece measuring 8 mm wide x 8 mm long x 10 mm thick was cut from the composite. One of the 8 mm x 8 mm surface of the test piece corresponding to the upper surface of the molding was used as a test surface. A wear test was performed using a sliding speed of 100 km/hour (a copper plate rotating at 2000 rpm) under a load of 1.5 kg (0.23 MPa) [(2.34 kg/cm)] for 2 hours (200 km of sliding distance). The test piece was set in the wear tester so that the steel fibers aligned in the composite were perpendicular to the direction of sliding. Wear resistance was evaluated by determining the amount of wear (worn volume) of the test piece per 100 km of sliding distance. The test results are shown in Table 8.

### Example 10

A composite containing steel fibers aligned unidirectionally was prepared in the same manner as in Example 9, with the exception that a mixture of uncoated steel fibers and plated steel fibers was employed. The uncoated steel fibers were the same as used in Example 9, while the plated steel fibers were obtained by performing nickel plating of the uncoated steel fibers using the same non-electrolytic nickel plating solution and the same plating method as in Example 2. The average thickness of the nickel plating was 1.2 µm. The steel fibers constituted 68 parts by weight of the molding mixture, in which 50 parts by weight were the nickel-plated fibers and 18 parts by weight were the uncoated fibers.

The resulting composite had a bending strength of 235.2 N/mm (2400 kg/cm), a Charpy impact strength of 18 kgcm/cm, and the amount of wear in the wear test was 11 mm³/100 km.

### Example 11

A composite containing steel fibers aligned unidirectionally was prepared in the same manner as in Example 9, with the exception that the uncoated steel fibers were employed as the metal fibers and a metal powder selected from copper, nickel, and cobalt was added to the molding mixture. The molding mixture contained 19 parts by weight of coke powder, 9 parts by weight of pitch as a binder, 62 parts by weight of steel fibers, and 10 parts by weight of metal powder. The metal fibers constituted about 30 volume % and the metal powder constituted about 5 volume %.

The results of abending strength test, a Charpy impact test, and a wear test are shown in Table 9.

### Example 12

A composite containing steel fibers aligned unidirectionally was prepared in the same manner as in Example 9, except that the uncoated steel fibers, copper-plated steel fibers, and/or nickel-plated steel fibers were used as metal fibers. In addition, a metal powder selected from copper, nickel, and cobalt metal powder was added to the molding mixture. The copper-plated steel fibers were obtained by immersing steel fibers in 20 times their weight of a plating solution and had an average plating thickness of 0.2µm. The nickel-plated steel fibers were formed in the same manner as in Example 2 and had an average plating thickness of 1.2 µm. The compositions of the molding mixtures are shown in Table 10. The fibers constituted about 20 volume % and the metal powder constituted about 5 volume %.

The results of a bending strength test, a Charpy impact test, and a wear test are also shown in Table 10.

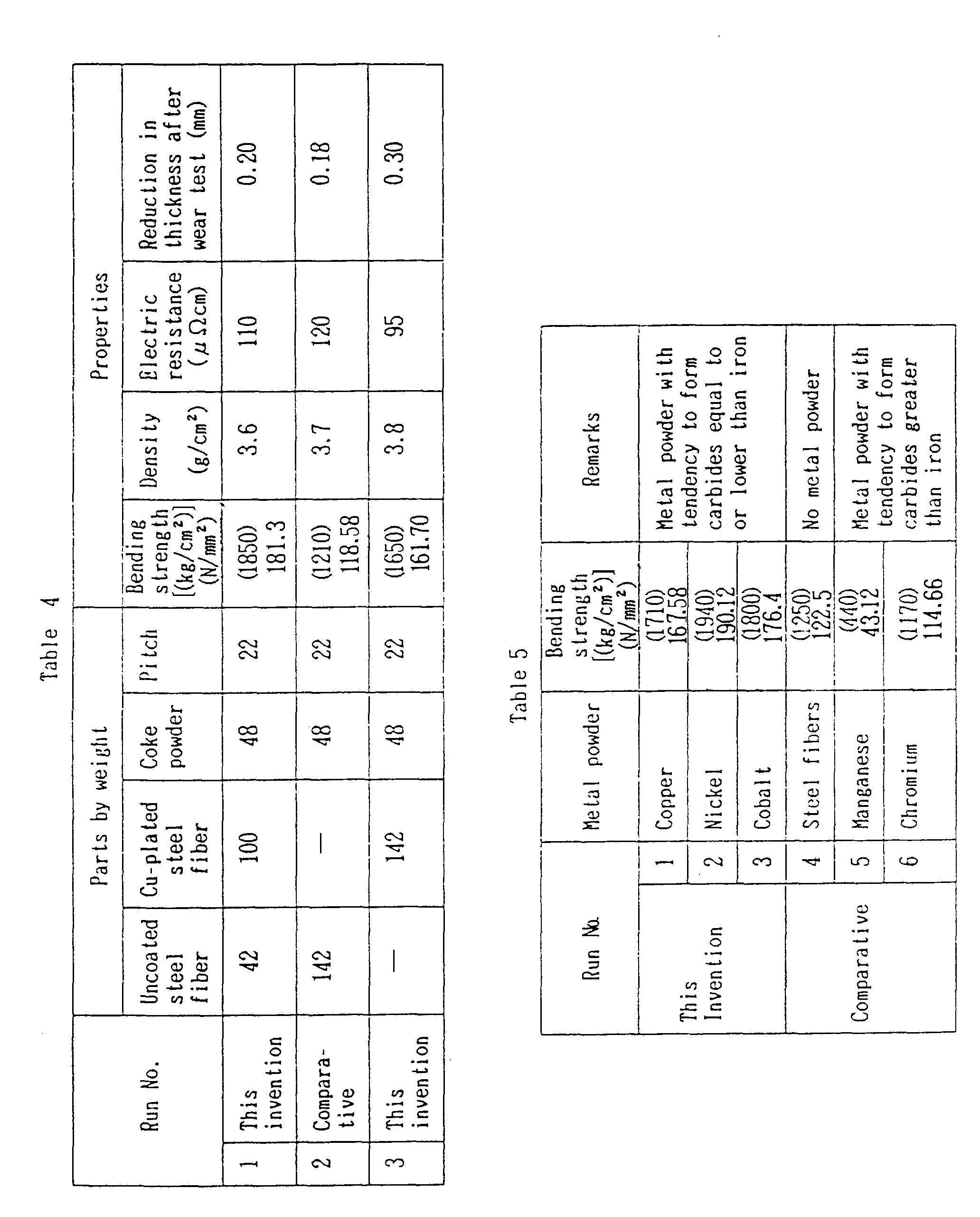

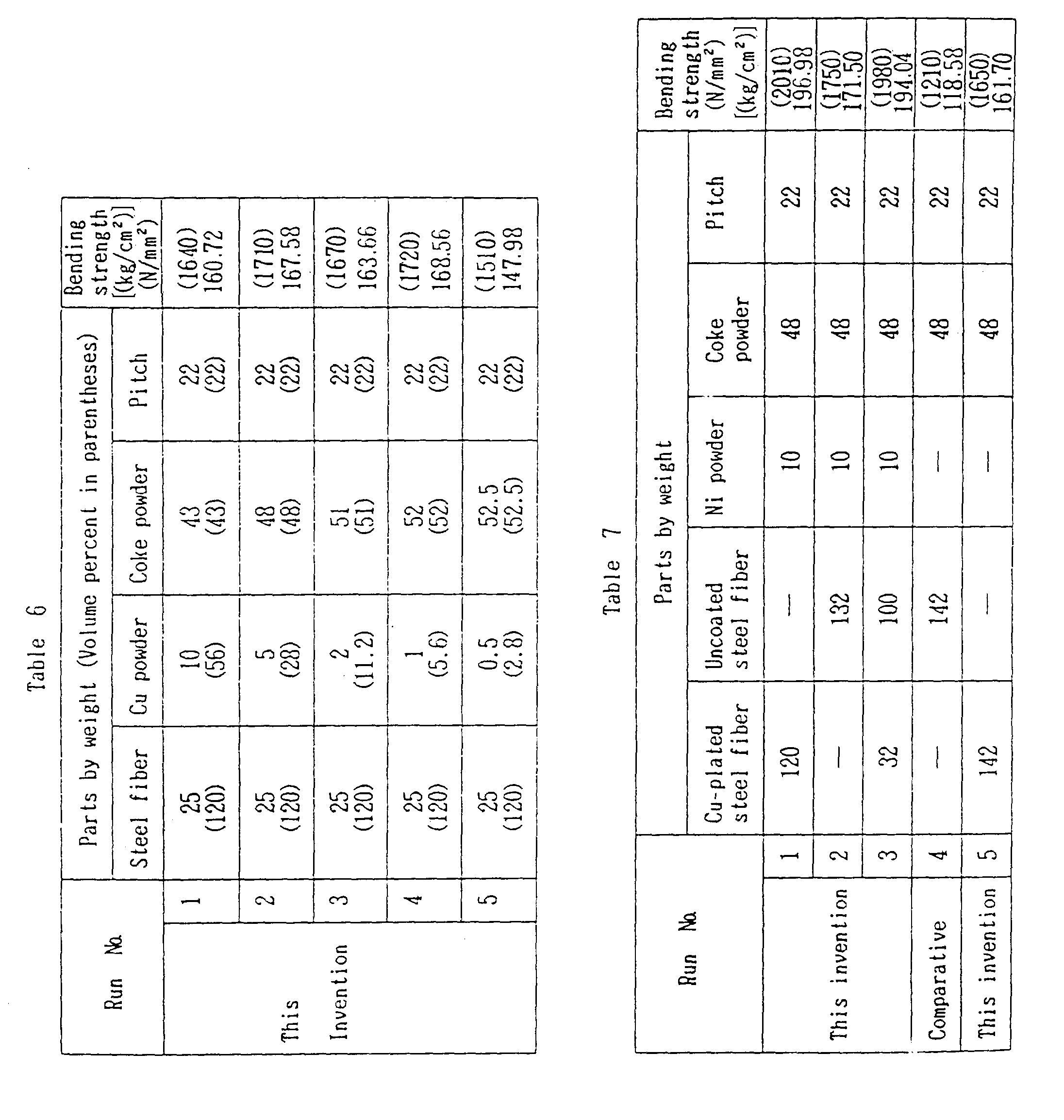

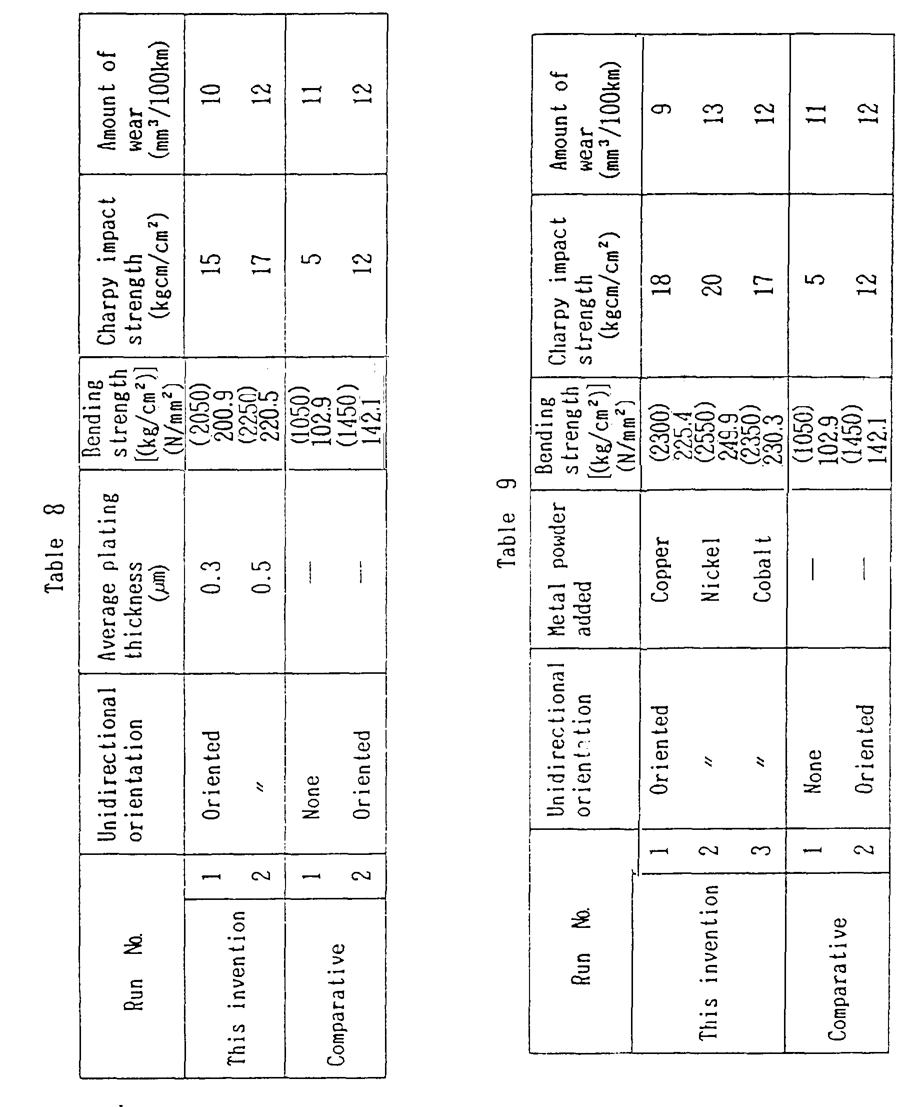

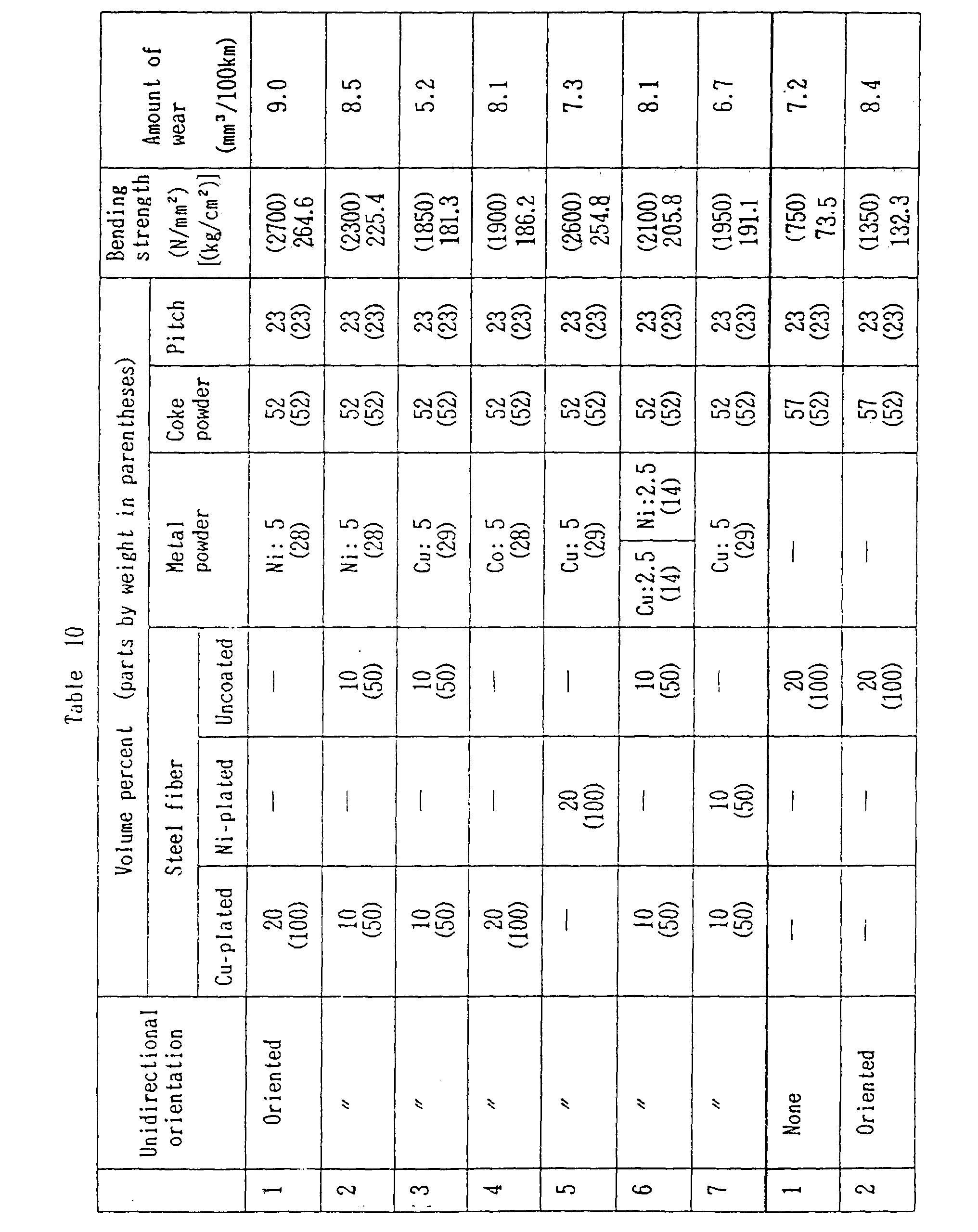

## Claims

1. A carbon/metal composite comprising a carbon matrix and metal fibers having a diameter of no greater than 0.5 mm and a length of at least 1 mm and being distributed in the carbon matrix in an amount of at least 10 % by volume of the composite, the surfaces of at least a portion of the metal fibers being coated or alloyed with another material selected from metals and ceramics having a tendency to form carbides equal to or less than the metal fibers, wherein the material coated on the fibers has a thickness of at least 0.1 µm.

2. The carbon/metal composite as claimed in claim 1, wherein the metal fibers are those of rod-shaped, needle-shaped, wedge-shaped, waveshaped, net-shaped, or a mixture of these shapes.

3. The carbon/metal composite of claim 1, wherein the fibers have a diameter of no greater than 0.3 mm and a length of at least 3 mm.

4. The carbon/metal composite of claim 1, wherein the fibers have an aspect ratio of at least 10.

5. The carbon/metal composite of claim 1, wherein the composite has a bending strength of at least 139.16 N/mm (1420 kg/cm).

6. The carbon/metal composite of claim 1, wherein the composite has an impact strength of at least 14710 J/m (15 kgcm/cm).

7. The carbon/metal composite of claim 1, wherein the composite has a wear resistance of less than 13 mm³ per 100 km of sliding distance wherein a test surface of the composite is rotated at 100 km/hour against a copper plate rotating at 2000 rpm under a load of 1.5 kg.

8. The carbon/metal composite of claim 1, wherein the composite has an electrical resistance of less than 110 µΩcm.

9. The carbon/metal composite of claim 1, wherein the fibers are present in an amount of 10 to 40 % by volume of the composite.

10. The carbon/metal composite of claim 1, wherein at least 50 % by weight of the fibers are coated.

11. The carbon/metal composite of claim 1, wherein at least a portion of the metal fibers are steel fibers, wherein the surface of at least a portion of the steel fibers is coated or alloyed with one or more metals selected from the group consisting of copper, nickel, cobalt, aluminum, and silicon.

12. The carbon/metal composite as claimed in claim 11, wherein said steel fibers are low carbon steel fibers.

13. The carbon/metal composite as claimed in claim 1, wherein the metal fibers are distributed in the composite so as to be substantially unidirectional with respect to each other.

14. The carbon/metal composite as claimed in any one of the preceding claims, wherein the carbon matrix is derived from a carbon raw material comprising a mixture of a carbonaceous aggregate powder and pitch as a binder, and the composite is molded into a prescribed shape by hot press molding.

15. A process for preparing a carbon/metal composite according to claim 1 comprising forming a molding mixture comprising a carbon raw material and at least one component selected from (a) said metal fibers, at least a portion of which are coated with said another material selected from metals and ceramics having a tendency to form carbides which is equal to or lower than that of the metal constituting the metal fibers, (b) said metal fibers, at least a portion of which have surfaces alloyed with another metal having a tendency to form carbides which is equal to or lower than that of the metal constituting the metal fibers, and (c) a mixture of said metal fibers with a metal powder, said metal powder having a tendency to form carbides which is equal to or lower than that of the metal constituting the metal fibers, followed by molding of the molding mixture to form a molding, and baking of the molding to carbonize the carbon raw material.

16. The process of claim 15, wherein the surface of at least a portion of the metal fibers of component (c) is coated or alloyed with said another material which has a tendency to form carbides which is equal to or lower than that of the metal constituting the metal fibers.

## Patentansprüche

1. Kohlenstoff/Metall-Verbundwerkstoff, umfassend eine Kohlenstoffmatrix und Metallfasern mit einem Durchmesser von nicht größer als 0,5 mm und einer Länge von mindestens 1 mm, welche in der Kohlenstoffmatrix in einer Menge von mindestens 10 Vol.-% des Verbundwerkstoffs verteilt sind, wobei die Oberflächen mindestens eines Teils der Metallfasern mit einem anderen aus Metallen und Keramiken gewählten Material mit einer gleichen oder geringeren Tendenz zur Bildung von Carbiden wie die Metallfasern beschichtet oder legiert sind, wobei das auf den Fasern beschichtete Material eine Dicke von mindestens 0,1 µm aufweist.

2. Kohlenstoff/Metall-Verbundwerkstoff nach Anspruch 1, wobei die Metallfasern solche mit einer Stabform, Nadelform, Keilform, Wellenform, Netzform oder einer Mischung aus diesen Formen sind.

3. Kohlenstoff/Metall-Verbundwerkstoff nach Anspruch 1, wobei die Fasern einen Durchmesser von nicht größer als 0,3 mm und eine Länge von mindestens 3 mm aufweisen.

4. Kohlenstoff/Metall-Verbundwerkstoff nach Anspruch 1, wobei die Fasern ein Aspektverhältnis von mindestens 10 aufweisen.

5. Kohlenstoff/Metall-Verbundwerkstoff nach Anspruch 1, wobei der Verbundwerkstoff eine Biegefestigkeit von mindestens 139,16 N/mm (1420 kg/cm) aufweist.

6. Kohlenstoff/Metall-Verbundwerkstoff nach Anspruch 1, wobei der Verbundwerkstoff eine Schlagfestigkeit von mindestens 14710 J/m (15 kgcm/cm) aufweist.

7. Kohlenstoff/Metall-Verbundwerkstoff nach Anspruch 1, wobei der Verbundwerkstoff eine Abriebbeständigkeit von weniger als 13 mm³ pro 100 km Gleitdistanz aufweist, wobei eine Testoberfläche des Verbundwerkstoffs mit 100 km/Stunde gegen eine mit 2000 U/min rotierende Kupferplatte unter einer Last von 1,5 kg rotiert wird.

8. Kohlenstoff/Metall-Verbundwerkstoff nach Anspruch 1, wobei der Verbundwerkstoff einen elektrischen Widerstand von weniger als 110 µΩcm aufweist.

9. Kohlenstoff/Metall-Verbundwerkstoff nach Anspruch 1, wobei die Fasern in einer Menge von 10 bis 40 Vol.-% des Verbundwerkstoffs vorliegen.

10. Kohlenstoff/Metall-Verbundwerkstoff nach Anspruch 1, wobei mindestens 50 Gew.-% der Fasern beschichtet sind.

11. Kohlenstoff/Metall-Verbundwerkstoff nach Anspruch 1, wobei mindestens ein Teil der Metallfasern Stahlfasern sind, wobei die Oberfläche mindestens eines Teils der Stahlfasern mit einem oder mehreren Metallen, die aus der Kupfer, Nickel, Cobalt, Aluminium und Silicium umfassenden Gruppe gewählt sind, beschichtet oder legiert ist.

12. Kohlenstoff/Metall-Verbundwerkstoff nach Anspruch 11, wobei die Stahlfasern kohlenstoffarme Stahlfasern sind.

13. Kohlenstoff/Metall-Verbundwerkstoff nach Anspruch 1, wobei die Metallfasern in dem Verbundwerkstoff so verteilt sind, daß sie im wesentlichen zueinander unidirektional sind.

14. Kohlenstoff/Metall-Verbundwerkstoff nach mindestens einem der vorangehenden Ansprüche, wobei die Kohlenstoffmatrix aus einem eine Mischung aus kohlenstoffhaltigem Aggregatpulver und Pech als Bindemittel umfassenden Kohlenstoffausgangsmaterial abgeleitet ist, und der Verbundwerkstoff duch Warmpreßformen zu einer vorgeschriebenen Form geformt wird.

15. Verfahren zur Herstellung eines Kohlenstoff/Metall-Verbundwerkstoffs nach Anspruch 1, umfassend die Bildung einer Formungsmischung, umfassend ein Kohlenstoffausgangsmaterial und mindestens eine Komponente, gewählt aus (a) den Metallfasern, von denen mindestens ein Teil mit dem anderen aus Metallen und Keramiken gewählten Material mit einer gleichen oder geringeren Tendenz zur Bildung von Carbiden wie der des Metalls, aus dem die Metallfasern gebildet sind, beschichtet ist, (b) den Metallfasern, von denen mindestens ein Teil Oberflächen aufweist, die mit einem anderen Metall mit einer gleichen oder geringeren Tendenz zur Bildung von Carbiden wie der des Metalls. aus dem die Metallfasern gebildet sind, legiert sind, und (c) einer Mischung aus den Metallfasern mit einem Metallpulver, wobei das Metallpulver die gleiche oder eine geringere Tendenz zur Bildung von Carbiden aufweist, als die des Metalls, aus dem die Metallfasern gebildet sind, und danach Formen der Formungsmischung zur Bildung eines Formkörpers, und Brennen des Formkörpers, um das Kohlenstoffausgangsmaterial zu carbonisieren.

16. Verfahren nach Anspruch 15, wobei die Oberfläche mindestens eines Teils der Metallfasern der Komponente (c) mit dem anderen Material, das die gleiche oder eine geringere Tendenz zur Bildung von Carbiden aufweist, wie die des Metalls, aus dem die Metallfasern gebildet sind, beschichtet oder legiert ist.

## Revendications

1. Un matériau composite carbone/métal comprenant une matrice de carbone et des fibres de métal présentant un diamètre n'excédant pas 0,5 mm et une longueur au moins égale à 1 mm, réparties dans la matrice de carbone selon une quantité au moins égale à 10 % en volume du matériau composite, les surfaces d'au moins une portion des fibres de métal étant plaquées ou alliées avec un autre matériau sélectionné parmi des métaux et des céramiques présentant une tendance à former des carbures égale ou inférieure à celle des fibres de métal, dans lequel le matériau plaqué sur les fibres présente une épaisseur au moins égale à 0,1 µm.

2. Le matériau composite carbone/métal tel que revendiqué dans la Revendication 1, dans lequel les fibres de métal sont celles se présentant en forme de baguette, en aiguille, en forme de clavette, en forme d'onde, en forme de réseau, ou en un mélange de ces formes.

3. Le matériau composite carbone/métal de la Revendication 1, dans lequel les fibres présentent un diamètre n'excédant pas 0,3 mm et une longueur au moins égale à 3 mm.

4. Le matériau composite carbone/métal de la Revendication 1, dans lequel les fibres présentent un rapport d'allongement au moins égal à 10.

5. Le matériau composite carbone/métal de la Revendication 1, dans lequel le matériau composite présente une résistance à la flexion au moins égale à 139,16 N/mm (1420 kg/cm).

6. Le matériau composite carbone/métal de la Revendication 1, dans lequel le matériau composite présente une résistance aux chocs au moins égale à 14 710 J/m (15 kgcm/cm).

7. Le matériau composite carbone/métal de la Revendication 1, dans lequel le matériau composite présente une résistance à l'usure inférieure à 13 mm³ par 100 km de distance de frottement, dans lequel une surface de test du matériau composite pivote à 100 km/heure contre une plaque de cuivre tournant à 2 000 tours par minute sous une charge de 1,5 kg.

8. Le matériau composite carbone/métal de la Revendication 1, dans lequel le matériau composite présente une résistance électrique inférieure à 110 µΩcm.

9. Le matériau composite carbone/métal de la Revendication 1, dans lequel les fibres sont présentes dans une quantité comprise entre 10 et 40 % en volume du matériau composite.

10. Le matériau composite carbone/métal de la Revendication 1, dans lequel au moins 50 % en masse des fibres sont plaquées.

11. Le matériau composite carbone/métal de la Revendication 1, dans lequel au moins une portion des fibres de métal sont des fibres d'acier, dans lequel la surface d'au moins une portion des fibres d'acier est plaquée ou alliée avec un ou plusieurs métaux sélectionnés parmi le groupe composé de cuivre, de nickel, de cobalt, d'aluminium et de silicone.

12. Le matériau composite carbone/métal tel que revendiqué dans la Revendication 11, dans lequel lesdites fibres d'acier sont des fibres d'acier à faible teneur en carbone.

13. Le matériau composite tel que revendiqué dans la Revendication 1, dans lequel les fibres de métal sont réparties dans le matériau composite de façon à ce qu'elles soient substantiellement unidirectionnelles les unes par rapport aux autres.

14. Le matériau composite carbone/métal tel que revendiqué dans l'une quelconque des Revendications précédentes, dans lequel la matrice de carbone est dérivée d'un matériau brut de carbone comprenant un mélange d'une poudre d'agrégat carboné et de poix en tant que liant, et dans lequel le matériau composite est moulé selon une forme prescrite par moulage par compression à chaud.

15. Un procédé de préparation d'un matériau composite carbone/métal en accord avec la Revendication 1, comprenant les étapes consistant à former un mélange à mouler comprenant un matériau brut de carbone et au moins un composant sélectionné parmi (a) lesdites fibres de métal, dont au moins une portion sont plaquées avec ledit autre matériau sélectionné parmi des métaux et des céramiques présentant une tendance à former des carbures qui est égale ou inférieure à celle du métal constituant les fibres de métal, (b) lesdites fibres de métal, dont au moins une portion présente des surfaces alliées avec un autre métal présentant une tendance à former des carbures qui est égale ou inférieure à celle du métal constituant les fibres de métal, et (c) un mélange desdites fibres de métal avec une poudre de métal, ladite poudre de métal présentant une tendance à former des carbures qui est égale ou inférieure à celle du métal constituant les fibres de métal, à mouler le mélange à mouler pour former un moulage, puis à cuire le moulage pour carboniser le matériau brut de carbone.

16. Le procédé selon la Revendication 15, dans lequel la surface d'au moins une portion des fibres de métal du composant (c) est plaquée ou alliée avec ledit autre matériau qui présente une tendance à former des carbures qui est égale ou inférieure à celle du métal constituant les fibres de métal.
